(19) **Europäisches Patentamt / European Patent Office / Office européen des brevets**

(11) **EP 4 062 165 B1**

(12) **FASCICULE DE BREVET EUROPEEN**

(45) Date de publication et mention de la délivrance du brevet:
**12.06.2024 Bulletin 2024/24**

(21) Numéro de dépôt: **20821327.2**

(22) Date de dépôt: **17.11.2020**

(51) Classification Internationale des Brevets (IPC):
**G01N 27/333** (2006.01)   **C07C 265/12** (2006.01)

(52) Classification Coopérative des Brevets (CPC):
**G01N 27/3335**

(86) Numéro de dépôt international:
**PCT/FR2020/052102**

(87) Numéro de publication internationale:
**WO 2021/099731 (27.05.2021 Gazette 2021/21)**

(54) **PROCEDE DE FABRICATION D'UNE MEMBRANE POLYMERIQUE POUR LA DETECTION POTENTIOMETRIQUE D'UN ANALYTE PRESENT DANS UN FLUIDE**

**VERFAHREN ZUR HERSTELLUNG EINER POLYMERMEMBRANE FÜR DEN POTENTIOMETRISCHEN NACHWEIS EINES IN EINER FLÜSSIGKEIT VORHANDENEN ANALYTEN**

**METHOD OF MANUFACTURING A POLYMERIC MEMBRANE FOR THE POTENTIOMETRIC DETECTION OF AN ANALYTE PRESENT IN A FLUID**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2019 FR 1912819**

(43) Date de publication de la demande:
**28.09.2022 Bulletin 2022/39**

(73) Titulaires:
• **Commissariat à l'énergie atomique et aux énergies alternatives 75015 Paris (FR)**
• **CardioRenal 67000 Strasbourg (FR)**

(72) Inventeurs:
• **ALIAS, Mélanie 38054 GRENOBLE Cedex 09 (FR)**
• **GOUGIS, Maxime 38054 GRENOBLE Cedex 09 (FR)**
• **HENRION, Guilhem 75015 PARIS (FR)**
• **MAILLEY, Pascal 38054 GRENOBLE Cedex 09 (FR)**
• **THERY-PARRIEL, Thibault 38054 GRENOBLE Cedex 09 (FR)**
• **THOMAS, Yohann 38100 GRENOBLE (FR)**

(74) Mandataire: **Brevalex Tour Trinity 1 B Place de la Défense 92400 Courbevoie (FR)**

(56) Documents cités:
**WO-A1-2010/076717    WO-A1-2013/015670
WO-A2-2008/016646    US-A1- 2017 028 396**

**Description**

**DOMAINE TECHNIQUE**

La présente invention se rapporte au domaine général des membranes polymériques pour la détection potentiométrique d'un analyte présent dans un fluide, et plus particulièrement dans un fluide corporel.

L'invention concerne un procédé de fabrication d'une telle membrane polymérique.

L'invention concerne également une telle membrane polymérique.

L'invention concerne également un procédé de fabrication d'une électrode de travail comprenant une telle membrane polymérique.

L'invention trouve des applications dans de nombreux domaines industriels, et notamment pour la fabrication de capteur électrochimique, par exemple déterminer la concentration de potassium dans le sang.

**ÉTAT DE LA TECHNIQUE ANTÉRIEURE**

Actuellement, la concentration sanguine en potassium est mesurée avec un capteur électrochimique par potentiométrie.

Le capteur comprend un collecteur de courant (pistes électriques conductrices), un transducteur (par exemple une couche de carbone qui permet la conversion de l'activité d'un ion dissous en un potentiel électrique) et une membrane solide sélective aux ions dite ISE (pour « Ion Selective Electrode » en terminologie anglo-saxonne).

La membrane ISE est en contact avec le fluide à analyser et permet le transport de l'ion cible jusqu'au transducteur à analyser.

Classiquement, la membrane ISE est obtenue à partir d'une solution comprenant :

- un polymère hydrophobe servant de base mécanique à la membrane, et limitant la pénétration d'eau,
- un plastifiant pour augmenter la mobilité des chaînes de polymère et obtenir une meilleure conduction des ions à l'intérieur de la membrane,
- un échangeur ionique permettant une meilleure transduction du signal,
- un solvant.

Depuis les années 60, la grande majorité des capteurs développés ont une membrane ISE à base de poly(chlorure de vinyle) ou PVC. Cependant, comme ce polymère n'est pas totalement inerte ni totalement hydrophobe, le polyuréthane (PU) a progressivement remplacé le PVC.

Dans l'article de Cuartero et al. (« Polyurethane Ionophore-Based Thin Loyer Membranes for Voltammetric Ion Activity Sensing », Anal. Chem. 2016, 88, 5649-5654), les propriétés de différentes membranes en polyuréthane, polystyrène, polyacrylate et PVC ont été comparées. Pour fabriquer les membranes, les différents constituants des membranes sont dissous dans du THF, puis la solution est déposée par dépôt à la tournette. Les propriétés mécaniques, physiques et/ou de résistance chimique des membranes élaborées avec le PU sont meilleures que celles élaborées avec les autres polymères.

L'article de Yun et al. (« Potentiometric Properties of Ion-Selective Electrode Membranes Based on Segmented Polyether Urethane Matrices », Anal. Chem. 1997, 69, 868-873) décrit également l'élaboration de membranes ISE en PU à partir d'une solution à base de THF seul, d'un mélange de THF avec du diméthylformamide (DMF) ou de DMF seul. Des membranes sélectives au potassium ont été réalisées à partir de ces matrices en PU et de valinomycine.

Dans le document WO 91/17432 A1, des membranes à base d'une matrice de PVC, de PU ou d'un copolymère de PVC/Ac/AI sont obtenues en dissolvant ses différents constituants dans du THF. Les membranes à base de polyuréthane présentent des performances électrochimiques similaires à celles des en PVC. Les membranes en copolymère présentent une très bonne adhésion sur un substrat en verre ou en $Si_3N_4$. Ces membranes sont, notamment, utilisées pour former une membrane sélective au potassium.

Le solvant utilisé pour la fabrication de ces différentes membranes est presque exclusivement le tétrahydrofurane (THF). Or ce solvant est un composé extrêmement volatile, inflammable et hautement toxique. Il est notamment classé CMR (cancérogène, mutagène et reprotoxique). La mise en oeuvre du procédé avec tel solvant nécessite donc des conditions particulières, notamment en ce qui concerne les risques environnementaux et pour la sécurité, ce qui rend le procédé difficilement industrialisable.

**EXPOSÉ DE L'INVENTION**

Un but de la présente invention est de proposer un procédé de fabrication de membrane de type ISE limitant voire supprimant l'utilisation de THF et permettant d'obtenir des membranes fiables et robustes.

Pour cela, la présente invention propose un procédé de fabrication d'une membrane polymérique pour la détection potentiométrique d'un analyte, le procédé comprenant les étapes successives suivantes :

- fourniture d'une formulation comprenant un polymère dissous, un échangeur ionique, un ionophore, éventuellement un plastifiant, et un solvant choisi parmi les éthers de glycol et leurs acétates, et les diacétates d'alkylène glycol,
- dépôt de la formulation sur un support, par exemple un transducteur,
- évaporation du solvant, de manière à former une membrane polymérique.

L'invention se distingue fondamentalement de l'art antérieur par l'utilisation d'un solvant choisi parmi un éther de glycol, un acétate d'éther de glycol ou un diacétate d'alkylène glycol. De tels solvant sont moins toxiques et moins volatils que le THF, ce qui rend la fabrication des capteurs potentiométriques moins contraignante, d'un point de vue des précautions d'utilisation liées aux risques environnementaux et vis-à-vis de la sécurité des personnes mettant en oeuvre le procédé, et/ou par rapport aux risques d'inflammabilité des solvants. De plus, comme ces solvants s'évaporent plus lentement que le THF, le dépôt obtenu est plus homogène et recouvre mieux la surface du support.

Avantageusement, le solvant est choisi parmi les acétates d'éther monoalkyliques d'éthylène glycol, les acétates d'éther monoalkylique de diéthylène glycol, les acétates d'éther dialkylique d'éthylène glycol, et les acétates d'éther dialkylique de diéthylène glycol.

Avantageusement, le solvant est l'acétate d'éther monoéthylique de diéthylène glycol.

Avantageusement, le solvant est choisi parmi le diacétate d'éthylène glycol et le diacétate de diéthylène glycol.

Avantageusement, la formulation comprend un solvant additionnel, moyennant quoi on forme un mélange de solvants, le solvant additionnel représentant moins de 50% volumique du mélange de solvants.

Avantageusement, l'ionophore et l'échangeur ionique sont sélectifs vis-à-vis des ions potassium.

Selon une première variante de réalisation avantageuse, le polymère est choisi parmi les polymères vinyliques, les polysiloxanes, les polystyrènes, l'acétate de cellulose, les copolymères de poly(vinylpyrrolidinone) tel que le poly-(vinyl pyrrolidone-co-vinyl acétate), les (méth)acrylates tel que le décylméthacrylate-hexanedioldiméthacrylate et le polyméthylméthacrylate.

Selon une autre variante de réalisation particulièrement avantageuse, le polymère est un polyuréthane.

L'invention concerne également une formulation pour fabriquer une membrane polymérique pour la détection potentiométrique d'un analyte, la formulation comprenant un polymère dissous, un échangeur ionique, un ionophore, éventuellement un plastifiant, et un solvant choisi parmi les éthers de glycol et leurs acétates, et les diacétates d'alkylène glycols.

L'invention concerne également une membrane polymérique pour la détection potentiométrique d'un analyte, obtenue par le procédé tel que défini précédemment, comprenant un polymère, un échangeur ionique, un ionophore, éventuellement un plastifiant, et des traces d'un solvant choisi parmi les éthers de glycol et leurs acétates, et les diacétates d'alkylène glycols. Par traces de solvant, on entend moins de 5% en masse de solvant.

Avantageusement, le polymère est un polyuréthane.

L'invention concerne également un procédé de fabrication d'une électrode de travail comprenant les étapes successives suivantes :

- fourniture d'une formulation comprenant un polymère dissous, un échangeur ionique, un ionophore, éventuellement un plastifiant, et un solvant choisi parmi les éthers de glycol et leurs acétates, et les diacétates d'alkylène glycols,
- fourniture d'un substrat, recouvert successivement par un collecteur de courant et par un transducteur,
- dépôt de la formulation sur le transducteur,
- évaporation du solvant, de manière à former une membrane polymérique.

Avantageusement, le transducteur est obtenu en déposant sur le collecteur de courant une solution contenant un matériau carboné et un solvant choisi parmi les éthers de glycol et leurs acétates, et les diacétates d'alkylène glycols.

Avantageusement, le solvant de la formulation et le solvant de la solution sont identiques, ce qui permet d'améliorer l'interface membrane ISE/transducteur.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

La figure 1 représente de manière, en coupe et vue de profil, une électrode de travail comprenant une membrane polymérique, disposée sur un substrat, selon un mode de réalisation particulier de l'invention,

La figure 2 est un graphique représentant le potentiel en fonction du temps, lors de la calibration de trois électrodes de travail comprenant chacune membrane polymérique obtenue à partir d'une formulation contenant du THF,

La figure 3 est un graphique représentant le potentiel en fonction du temps, lors de la calibration de trois électrodes de travail comprenant chacune membrane polymérique obtenue à partir d'une formulation selon un mode de réalisation particulier de l'invention,

La figure 4 est un graphique représentant le potentiel en fonction de la concentration, obtenu à partir de la courbe de calibration de la figure 2,

La figure 5 est un graphique représentant le potentiel en fonction de la concentration, obtenu à partir de la courbe de calibration de la figure 3,

La figure 6 est une courbe représentant les dérives du potentiel en fonction de la concentration en potassium, pour une électrode dont la membrane polymérique a été obtenue à partir d'une formulation contenant du THF (référencée CE-1) et pour une électrode dont la membrane polymérique obtenue à partir d'une formulation selon un mode de réalisation particulier de l'invention (référencée INV-1),

La figure 7 est un graphique représentant le potentiel en fonction du temps, et de différentes concentrations, lors de la calibration de trois électrodes de travail, comprenant chacune membrane polymérique obtenue à partir de différentes formulations selon différents modes de réalisation particulier de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

En outre, dans la description ci-après, des termes qui dépendent de l'orientation, tels que « dessus », «dessous », etc. d'une structure s'appliquent en considérant que la structure est orientée de la façon illustrée sur les figures.

## EXPOSÉ DÉTAILLÉ DE MODES DE RÉALISATION PARTICULIERS

Par la suite, même si la description fait référence à une membrane polymérique 10 pour la détection potentiométrique sélective d'un analyte sous forme ionique dans le sang, l'invention est transposable à tout autre fluide corporel, tel que la sueur, la salive, les larmes, l'urine, ou encore le plasma, ou d'une manière générale à tout autre fluide contenant un analyte à détecter. L'analyte peut être un ion potassium, sodium, magnésium, fer, calcium, lithium, chlore, ou encore hydrogène.

La membrane polymérique 10 est obtenue selon un procédé comportant les étapes successives suivantes :

a) fourniture d'une formulation comprenant un polymère dissous, un échangeur ionique, un ionophore, éventuellement un plastifiant, et au moins un solvant choisi parmi les éthers de glycol, les acétates d'éther de glycol ou les diacétates d'alkylène glycol,

b) dépôt de la formulation sur un support, par exemple un transducteur,

c) évaporation du solvant, de manière à former une membrane polymérique.

La formulation fournie à l'étape a) comprend au moins un éther de glycol, un acétate d'éther de glycol ou un diacétate d'alkylène glycol.

Par exemple, l'éther de glycol est choisi parmi :

- les éthers monoalkyliques d'éthylène glycol, tel que l'éther monoéthylique de l'éthylène glycol (CAS 110-80-5), l'éther monopropylique de l'éthylène glycol (CAS 2807-30-9) et l'éther monométhylique de l'éthylène glycol (CAS 109-86-4),
- les éthers dialkyliques d'éthylène glycol, tel que l'éther diéthylique de l'éthylène glycol (CAS 629-14-1), l'éther dibutylique de l'éthylène glycol (CAS 112-48-1) et l'éther diméthylique de l'éthylène glycol (CAS 110-71-4),
- les éthers monoalkyliques du diéthylène glycol, tel que l'éther monoéthylique du diéthylène glycol (CAS 111-90-0 aussi nommé éther éthylique du diéthylène glycol) et l'éther monométhylique du diéthylène glycol (CAS 111-77-3),
- les éthers dialkyliques du diéthylène glycol, tel que l'éther diéthylique du diéthylène glycol (CAS 112-36-7).

Le diacétate d'alkylène glycol est, par exemple, choisi parmi le diacétate d'éthylène glycol (CAS 111-55-7, EGDA), le diacétate de diéthylène glycol (CAS 628-68-2, DGDA) et le diacétate de propylène glycol (CAS 623-84-7).

De préférence, le solvant est choisi parmi les acétates d'éther de glycol, regroupant les acétates d'éther d'éthylène glycol et les acétates d'éther de propylène glycol.

L'acétate d'éther de propylène glycol est par exemple un acétate d'éther monoalkylique de propylène glycol, tel que l'acétate d'éther monométhylique de propylène glycol (CAS 108-65-6).

De préférence, on choisira le solvant parmi les acétates d'éther d'éthylène glycol et parmi les acétates d'éther de diéthylène glycol. A titre illustratif, il est choisi, avantageusement, parmi :

- les acétates d'éther monoalkyliques d'éthylène glycol tel que l'acétate d'éther monoéthylique de l'éthylene glycol (CAS 111-15-9, aussi nommé acétate de 2-Ethoxyéthyle), l'acétate d'éther monométhylique de l'éthylene glycol (CAS 110-49-6, aussi noté EGMEA), l'acétate d'éther monopropylique de l'éthylene glycol (CAS 20706-25-6), et l'acétate d'éther monobutylique de l'éthylene glycol (CAS 112-07-2),
- les acétates d'éther monoalkylique de diéthylène glycol tel que l'acétate d'éther monoéthylique de diéthylène glycol (CAS 112-15-2, DGMEA), et l'acétate d'éther monométhylique de diéthylène glycol,
- les acétates d'éther dialkylique d'éthylène glycol,
- les acétates d'éther dialkylique de diéthylène glycol, tel que l'acétate d'éther diméthylique de diéthylène glycol.

Le solvant peut être utilisé seul ou en mélange.

Selon une première variante de réalisation, on choisira un mélange comprenant, et de préférence, constitué d'un ou plusieurs solvants parmi les éthers de glycols, les acétates d'éther de glycol, et les diacétates d'alkylène glycol, précédemment cités.

Selon une autre variante de réalisation, on choisira un mélange de solvant comprenant et, de préférence, constitué d'un éther de glycol, d'un acétate d'éther de glycol et/ou d'un diacétate d'alkylène glycol et un solvant additionnel. Le solvant additionnel représente, de préférence, moins de 50% volumique, et encore plus préférentiellement, moins de 20 % volumique du mélange de solvants. Le solvant additionnel peut être du THF.

Le polymère de la formulation est, avantageusement, un polymère hydrophobe. En particulier, le polymère peut être choisi parmi le polymères vinyliques, les polysiloxanes (gomme silicone), les polyuréthanes, les polystyrènes, l'acétate de cellulose, les copolymères de poly(vinylpyrrolidinone) (PVP) tel que le poly-(vinyl pyrrolidone-co-vinyl acétate), les (méth)acrylates tel que le décylméthacrylate-hexanedioldiméthacrylate et le polyméthylméthacrylate. On pourra également choisir un de leurs copolymères.

Le polymère de la formulation est, de préférence, un polyuréthane.

Le plastifiant est, par exemple, choisi parmi : 2-Nitrophényl octyl éther (NPOE), bis (2-éthylhexyl) sébacate (DOS), di-octyl phthalate (DOP), dibutylphthalate (DBP), bis(butylpentyl)adipate (BBPA), didécylphthalate, Dioctyl phényl phosphonate, dioctyl azélate (DOZ), dioctyl adipate (DOA), tris(2-éthylhexyl)phosphate (TEHP), des chloroalcanes (paraffines chlorées).

Certains polymères ou copolymères ne nécessitent pas de plastifiant pour former une ISE, par exemple le copolymère de PMMA/PDMA.

Le choix du ionophore et de l'échangeur dépend de l'analyte à détecter. Il permet de détecter sélectivement l'analyte d'intérêt.

A titre illustratif et non limitatif, l'échangeur ionique peut être choisi parmi le Potassium tétrakis(4-chlorophényl)borate, le Sodium tétrakis(4-chlorophenyl)borate, le Potassium tétrakis[3,5-bis(trifluorométhyl)phényl]borate, le Sodium tétrakis[3,5-bis(trifluorométhyl)phényl]borate.

A titre illustratif et non limitatif, on peut choisir le ionophore parmi : la valinomycine, la nigericine, la nonactine, la monactine, ou encore parmi la famille des éthers couronnes tels que : les dicyclohexano-18-couronne-6, dibenzo-18-couronne-6, naphtho-15-couronne-5, benzo-15-couronne-5 dont le (hexanoyloxyméthyl)benzo-15-couronne-5, 2-Dodécyl-2-methyl-1,3-propanediyl bis[N-[5'-nitro(benzo-15-couronne-5)-4'-yl]carbamate] et dibenzo-30-couronne-10.

La formulation utilisée pour mettre en oeuvre le procédé peut comprendre :

- de 25% à 75% massique de polymère,
- de 25% à 75% massique de plastifiant,
- de 0,1% à 0,5% massique d'échangeur ionique,
- de 0,5% à 2,5% massique d'ionophore.

De manière avantageuse, le rapport molaire de l'échangeur ionique sur le ionophore va de 20% à 80%.

Lors de l'étape b), la formulation peut être déposée par sérigraphie. Une telle technique permet de réduire les coûts de fabrication par rapport à un dépôt de type goutte à goutte.

L'évaporation du solvant lors de l'étape c) conduit à la formation d'une membrane solide. On réalise, avantageusement, un recuit à une température allant de 35°C à 130°C pour favoriser l'évaporation du solvant. La membrane a une épaisseur allant, par exemple, de 5 à 50 $\mu$m.

A l'issue du procédé, la membrane contient des traces de solvant. Elle contient, de préférence, de 0,1% à 5% en masse de solvant, par exemple de 0,1% à 2% en masse.

Avantageusement, le procédé précédemment décrit est utilisé pour fabriquer la membrane polymérique ISE 10 d'une électrode de travail.

L'électrode de travail est formée sur un substrat 20, par exemple en verre.

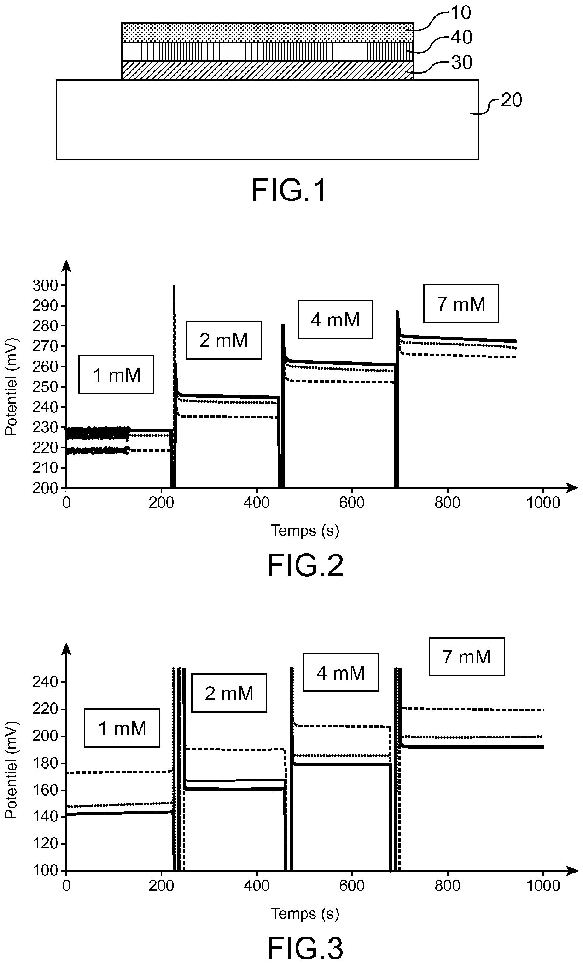

L'électrode comprend successivement, depuis le substrat vers le haut de l'empilement (figure 1) :

- un collecteur de courant 30,
- un transducteur 40, permettant de convertir l'activité d'un ion dissous en potentiel électrique,
- la membrane polymérique 10 sélective vis-à-vis de l'ion à détecter, permettant de transporter l'ion cible depuis la solution vers le transducteur.

Le collecteur de courant 30 est, par exemple, sous la forme de pistes électriquement conductrices. Le collecteur de courant 30 est, avantageusement, métallique, notamment en platine. Le collecteur a une épaisseur allant, par exemple, de 1 à 1000 nm.

Le transducteur 40 est, de préférence, en un matériau carboné. Par exemple, il s'agit d'un mélange de graphite et de noir de carbone. La couche formant le transducteur peut être obtenue en préparant une solution contenant un ou plusieurs matériaux sous forme particulaire et/ou lamellaire, un solvant, et éventuellement un liant, puis en déposant la solution. Le solvant est, avantageusement, le même que celui utilisé pour fabriquer la membrane polymérique de l'électrode. Le transducteur 40 a une épaisseur allant, par exemple, de 1 à 10 $\mu$m.

Une telle électrode de travail 10 est, avantageusement, disposée dans un capteur électrochimique comprenant, en outre, une électrode de référence. L'électrode de référence est, avantageusement, une électrode Ag/AgCl. Selon un autre mode de réalisation, le capteur pourrait également comprendre une contre-électrode.

Le capteur électrochimique obtenu permet de déterminer la concentration en analyte d'un fluide en mesurant la différence de potentiel entre l'électrode de référence et l'électrode de travail.

Le capteur permet d'analyser des échantillons de fluide de différents volumes. De préférence, le capteur peut servir à analyser une goutte de fluide, notamment une goutte de fluide corporel, par exemple une goutte de sang. Par goutte, on entend un volume de fluide allant de 4$\mu$L à 100$\mu$L.

Le capteur électrochimique peut également être utilisé en combinaison avec un capteur optique dans un dispositif d'analyse. Ces capteurs peuvent être positionnés dans une même chambre d'analyse ou dans des chambres différentes. Les mesures électrochimiques et optiques peuvent être réalisées simultanément ou consécutivement. Le lancement d'une des analyses, par exemple, l'analyse électrochimique, peut dépendre du résultat obtenu pour l'autre analyse, par exemple pour l'analyse optique.

Le dispositif d'analyse peut permettre de détecter un ou plusieurs analytes.

Exemples illustratifs et non limitatifs d'un mode de réalisation :

Deux formulations pour fabriquer des membranes ISE, identiques (en terme de pourcentages massiques de polymère (PU), plastifiant, échangeur ionique, ionophore et extrait sec final de la solution), l'une contenant du THF (référencée CE-1) et l'autre contenant du DGMEA (référencée INV-1) ont été préparées.

Pour préparer les formulations, on chauffe et on agite une solution contenant les différents constituants de la membrane ISE. Dans le cas de CE-1, une température de 50°C a été utilisée et, dans le cas de INV-1, la température est d'environ 110°C.

Une fois le mélange rendu homogène, un volume de 1,0 $\mu$L de chaque formulation est déposé sur la surface du transducteur. L'ensemble est ensuite mis à l'étuve pendant une nuit à 50°C.

Les puces utilisées comportent une électrode de référence (Ag/AgCl, 5874 Dupont) et trois électrodes de travail (i.e. ISE).

Pour chaque puce, un test de calibration est réalisé avec des solutions de 1, 2, 4 et 7mM de KCl (avec 100 mM de NaCl). Le potentiel est enregistré durant au moins 3 minutes pour chaque concentration et pour chacune des trois électrodes de travail (figures 2 et 3).

L'analyse des données est réalisée en appliquant l'équation de Nernst :

$$E = E^0 + \frac{RT}{nF}\ln\frac{a_{Ox}^x}{a_{Red}^y}$$

avec :

$R$ la constante des gaz parfaits,

T la température exprimée en Kelvin,

F la constante de Faraday,

$\alpha$ l'activité chimique des espèces, avec Ox pour l'espèce oxydante et Red l'espèce réductrice,

n le nombre d'électrons,

E le potentiel mesuré,

$E^0$ est obtenu par régression linéaire à partir des courbes de calibrations.

Dans le cas du potassium, nous avons :

$$x = y = 1 \; ; n = 1 \; ; a_{Red} = 1 \; ; a_{Ox} = [K^+]. \text{A } 25°C, \frac{RT}{F} ln\, 10 \sim 0,059\, V$$

L'équation devient alors :

$$E = E^0 + 60\; mV\; log[K^+]. \text{A } 20°C$$

On obtient :

$$E = E^0 + 58,2\; mV\; log[K^+]$$

En traçant le potentiel en fonction du logarithme de la concentration de potassium, on obtient une droite dont la pente théorique sera d'environ 60mV/décade.

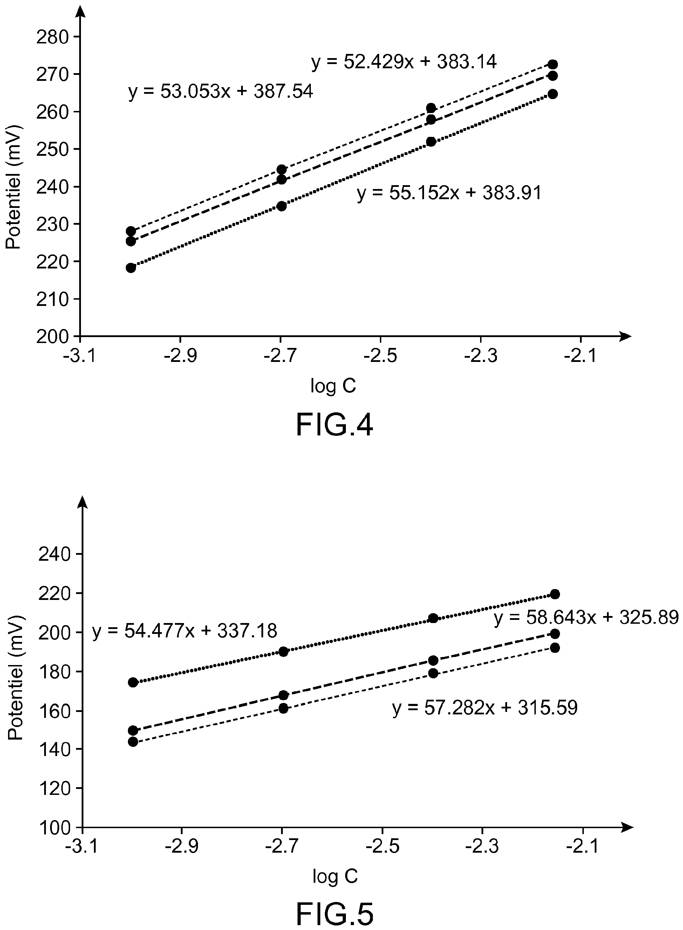

L'analyse des courbes obtenues (figures 3 et 4) permet d'extraire différents paramètres donnés dans le tableau suivant : la pente (sélectivité), le $R^2$ (coefficient de régression linéaire) et le $E^0$. Les valeurs de pente et de $E^0$ correspondent aux valeurs moyennes et sont donnés avec les écarts standards.

|  | INV-1 | CE-1 |
|---|---|---|
| **Pente (mV/décade)** | $56.8 \pm 2.1$ | $53.5 \pm 1.4$ |
| **$R^2$** | 1.000 | 0.999 |
| **$E^0$ (mV)** | $326 \pm 11$ | $385 \pm 2$ |

La figure 5 représente la dérive des différentes mesures. Dans presque toute la gamme de concentration utilisée (hormis 1mM), CE-1 présente une dérive plus élevée du potentiel comparé à INV-1. Cela se traduit par un comportement moins stable de la membrane dès lors que des concentrations légèrement plus élevées en $K^+$ sont utilisées (typiques de la concentration en ions potassium dans le sang humain).

Les résultats montrent dans l'ensemble une meilleure réponse électrochimique pour les membranes préparées à partir de la formulation INV-1. Les sensibilités sont plus élevées et le coefficient de régression linéaire légèrement supérieur. La stabilité du capteur (inversement proportionnelle à la dérive) est également meilleure.

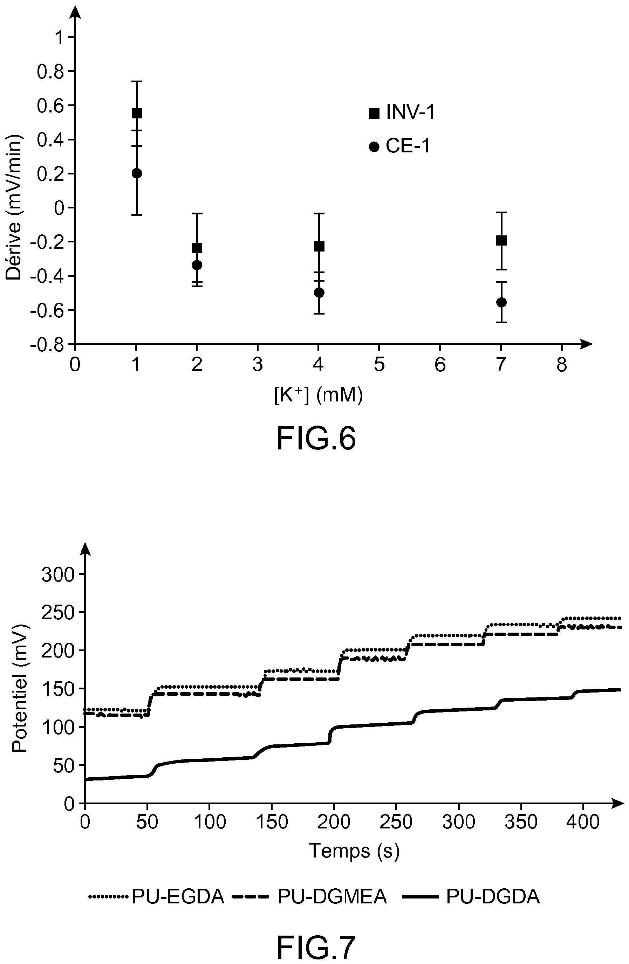

Dans un autre exemple de réalisation, trois électrodes de travail contenant une membrane à base de PU ont été préparées. Le solvant utilisé pour fabriquer la première électrode est du DGMEA, pour la deuxième électrode, il s'agit de EGDA et pour la troisième électrode il s'agit de DGDA. Les électrodes sont immergées dans une solution, mise sous agitation, puis la concentration en analyte est mesurée. Ce mode de mesure est différent du mode de mesure réalisé en statique sur une puce. La concentration en potassium croît progressivement dans la solution par ajout (figure 7).

Les différents résultats sont répertoriés dans le tableau suivant :

|  | PU-DGMEA | PU-EGDA | PU-DGDA |
|---|---|---|---|
| **Pente (mV/décade)** | 50.1 | 51.2 | 50,6 |
| **$R^2$** | 0.998 | 0.999 | 0.994 |
| **$E^0$ (mV)** | 341 | 355 | 257 |

Les trois électrodes présentent de bonnes performances électrochimiques.

**Revendications**

1. Procédé de fabrication d'une membrane polymérique (10) pour la détection potentiométrique d'un analyte, le procédé comprenant les étapes successives suivantes :

   - fourniture d'une formulation comprenant un polymère dissous, un échangeur ionique, un ionophore, éventuellement un plastifiant, et un solvant choisi parmi les diacétates d'alkylène glycol, les éthers de glycol et leurs acétates,
   - dépôt de la formulation sur un support, par exemple un transducteur (40),
   - évaporation du solvant, de manière à former une membrane polymérique (10).

2. Procédé selon la revendication 1, **caractérisé en ce que** le solvant est choisi parmi les acétates d'éther monoalkyliques d'éthylène glycol, les acétates d'éther monoalkylique de diéthylène glycol, les acétates d'éther dialkylique d'éthylène glycol, et les acétates d'éther dialkylique de diéthylène glycol.

3. Procédé selon la revendication précédente, **caractérisé en ce que** le solvant est l'acétate d'éther monoéthylique de diéthylène glycol.

4. Procédé selon la revendication 1, **caractérisé en ce que** le solvant est choisi parmi le diacétate d'éthylène glycol et le diacétate de diéthylène glycol.

5. Procédé selon l'une des revendications 1 à 4, **caractérisé en ce que** la formulation comprend un solvant additionnel, moyennant quoi on forme un mélange de solvants, le solvant additionnel représentant moins de 50% volumique du mélange de solvants.

6. Procédé selon l'une des revendications 1 à 5, **caractérisé en ce que** l'ionophore et l'échangeur ionique sont sélectifs vis-à-vis des ions potassium.

7. Procédé selon l'une quelconque des revendications 1 à 6, **caractérisé en ce que** le polymère est choisi parmi les polymères vinyliques, les polysiloxanes, les polyuréthanes, les polystyrènes, l'acétate de cellulose, les copolymères de poly(vinylpyrrolidinone) tel que le poly-(vinyl pyrrolidone-co-vinyl acétate), les (méth)acrylates tel que le décylméthacrylate-hexanedioldiméthacrylate et le polyméthylméthacrylate.

8. Procédé selon l'une quelconque des revendications 1 à 6, **caractérisé en ce que** le polymère est un polyuréthane.

9. Formulation pour fabriquer une membrane polymérique (10) pour la détection potentiométrique d'un analyte, la formulation comprenant un polymère dissous, un échangeur ionique, un ionophore, éventuellement un plastifiant, et un solvant choisi parmi les éthers de glycol et leurs acétates, et les diacétates d'alkylène glycols.

10. Membrane polymérique (10) pour la détection potentiométrique d'un analyte, obtenue par le procédé selon l'une quelconque des revendications 1 à 8, comprenant un polymère, un échangeur ionique, un ionophore, éventuellement un plastifiant, et des traces d'un solvant choisi parmi les éthers de glycol et leurs acétates, et les diacétates d'alkylène glycols.

11. Procédé de fabrication d'une électrode de travail comprenant les étapes successives suivantes :

   - fourniture d'une formulation comprenant un polymère dissous, un échangeur ionique, un ionophore, éventuellement un plastifiant, et un solvant choisi parmi les éthers de glycol et leurs acétates, et les diacétates d'alkylène glycols,
   - fourniture d'un substrat (20), recouvert successivement par un collecteur de courant (30) et par un transducteur (40),
   - dépôt de la formulation sur le transducteur (40),
   - évaporation du solvant, de manière à former une membrane polymérique (10).

12. Procédé selon la revendication 11, **caractérisé en ce que** le transducteur (40) est obtenu en déposant, sur le collecteur de courant (30), une solution contenant un matériau carboné et un solvant choisi parmi les éthers de glycol et leurs acétates, et les diacétates d'alkylène glycols.

13. Procédé selon la revendication 12, **caractérisé en ce que** le solvant de la formulation et le solvant de la solution sont identiques.

## Patentansprüche

1. Verfahren zur Herstellung einer polymerischen Membran (10) für die potentiometrischen Detektion eines Analyten, wobei das Verfahren die folgenden aufeinanderfolgenden Schritte umfasst:

    - Bereitstellung einer Formulierung, die ein gelöstes Polymer, einen Ionenaustauscher, einen Ionophor, gegebenenfalls einen Weichmacher und ein Lösungsmittel, ausgewählt aus Alkylenglykoldiacetaten, Glykolethern und ihren Acetaten, umfasst,
    - Aufbringen der Formulierung auf einen Träger, zum Beispiel einen Wandler (40),
    - Verdampfen des Lösungsmittels, um eine polymerische Membran (10) zu bilden.

2. Verfahren nach Anspruch 1, **dadurch gekennzeichnet, dass** das Lösungsmittel ausgewählt ist aus Ethylenglykolmonoalkyletheracetaten, Diethylenglykolmonoalkyletheracetaten, Ethylenglykoldialkyletheracetaten und Diethylenglykoldialkyletheracetaten.

3. Verfahren nach dem vorhergehenden Anspruch, **dadurch gekennzeichnet, dass** es sich bei dem Lösungsmittel um Diethylenglycolmonoethyletheracetat handelt.

4. Verfahren nach Anspruch 1, **dadurch gekennzeichnet, dass** das Lösungsmittel ausgewählt ist aus Ethylenglykoldiacetat und Diethylenglykoldiacetat.

5. Verfahren nach einem der Ansprüche 1 bis 4, **dadurch gekennzeichnet, dass** die Formulierung ein zusätzliches Lösungsmittel umfasst, wodurch ein Lösungsmittelgemisch gebildet wird, wobei das zusätzliche Lösungsmittel weniger als 50 Volumen-% des Lösungsmittelgemisches ausmacht.

6. Verfahren nach einem der Ansprüche 1 bis 5, **dadurch gekennzeichnet, dass** der Ionophor und der Ionenaustauscher gegenüber Kaliumionen selektiv sind.

7. Verfahren nach einem der Ansprüche 1 bis 6, **dadurch gekennzeichnet, dass** das Polymer ausgewählt ist aus Vinylpolymeren, Polysiloxanen, Polyurethanen, Polystyrolen, Celluloseacetat, Copolymeren von Poly(vinylpyrrolidinon) wie Poly-(vinylpyrrolidon-co-vinylacetat), (Meth)acryllaten wie Decylmethacrylat-Hexandioldimethacrylat und Polymethylmethacrylat.

8. Verfahren nach einem der Ansprüche 1 bis 6, **dadurch gekennzeichnet, dass** das Polymer ein Polyurethan ist.

9. Formulierung zum Herstellen einer polymerischen Membran (10) für den potentiometrischen Nachweis eines Analyten, wobei die Formulierung ein gelöstes Polymer, einen Ionenaustauscher, einen Ionophor, gegebenenfalls einen Weichmacher und ein Lösungsmittel, ausgewählt aus Glykolethern und deren Acetaten und Alkylenglykoldiacetaten, umfasst.

10. Polymerische Membran (10) für den potentiometrischen Nachweis eines Analyten, erhalten durch das Verfahren nach einem der Ansprüche 1 bis 8, umfassend ein Polymer, einen Ionenaustauscher, ein Ionophor, gegebenenfalls einen Weichmacher und Spuren eines Lösungsmittels, ausgewählt aus Glycolethern und deren Acetaten und Alkylenglycoldiacetaten.

11. Verfahren zur Herstellung einer Arbeitselektrode, umfassend die folgenden aufeinanderfolgenden Schritte:

    - Bereitstellung einer Formulierung, die ein gelöstes Polymer, einen Ionenaustauscher, einen Ionophor, gegebenenfalls einen Weichmacher und ein Lösungsmittel, ausgewählt aus Glykolethern und ihren Acetaten und Alkylenglykoldiacetaten, umfasst,
    - Bereitstellung eines Substrats (20), das nacheinander mit einem Stromkollektor (30) und einem Wandler (40) bedeckt wird,
- Aufbringen der Formulierung auf den Wandler (40),
- Verdampfen des Lösungsmittels, um eine polymerische Membran (10) zu bilden.

12. Verfahren nach Anspruch 11, **dadurch gekennzeichnet, dass** der Wandler (40) durch Aufbringen einer Lösung auf den Stromabnehmer (30) erhalten wird, die ein kohlenstoffhaltiges Material und ein Lösungsmittel enthält, das aus Glykolethern und deren Acetaten und Alkylenglykoldiacetaten ausgewählt ist.

13. Verfahren nach Anspruch 12, **dadurch gekennzeichnet, dass** das Lösungsmittel der Formulierung und das Lösungsmittel der Lösung identisch sind.

**Claims**

1. Method for producing a polymer membrane (10) for the potentiometric detection of an analyte, the method comprising the following successive steps:

   - providing a formulation comprising a dissolved polymer, an ion exchanger, an ionophore, optionally a plasticiser, and a solvent selected from alkylene glycol diacetates, glycol ethers and acetates thereof,
   - depositing the formulation on a support, for example a transducer (40),
   - evaporating the solvent, so as to form a polymer membrane (10).

2. Method according to claim 1, **characterised in that** the solvent is selected from ethylene glycol monoalkyl ether acetates, diethylene glycol monoalkyl ether acetates, ethylene glycol dialkyl ether acetates, and diethylene glycol dialkyl ether acetates.

3. Method according to the preceding claim, **characterised in that** the solvent is diethylene glycol monoethyl ether acetate.

4. Method according to claim 1, **characterised in that** the solvent is selected from ethylene glycol diacetate and diethylene glycol diacetate.

5. Method according to any one of claims 1 to 4, **characterised in that** the formulation comprises an additional solvent, whereby a mixture of solvents is formed, the additional solvent being less than 50% by volume of the mixture of solvents.

6. Method according to any one of claims 1 to 5, **characterised in that** the ionophore and ion exchanger are selective for potassium ions.

7. Method according to any one of claims 1 to 6, **characterised in that** the polymer is selected from vinyl polymers, polysiloxanes, polyurethanes, polystyrenes, cellulose acetate, poly(vinylpyrrolidinone) copolymers such as poly(vinyl pyrrolidone-co-vinyl acetate), (meth)acrylates such as decylmethacrylate-hexanediol dimethacrylate and polymethylmethacrylate.

8. Method according to any one of claims 1 to 6, **characterised in that** the polymer is a polyurethane.

9. Formulation for producing a polymer membrane (10) for the potentiometric detection of an analyte, the formulation comprising a dissolved polymer, an ion exchanger, an ionophore, optionally a plasticiser, and a solvent selected from glycol ethers and acetates thereof, and alkylene glycol diacetates.

10. Polymer membrane (10) for the potentiometric detection of an analyte, obtained by the method according to any one of claims 1 to 8, comprising a polymer, an ion exchanger, an ionophore, optionally a plasticiser, and traces of a solvent selected from glycol ethers and acetates thereof, and alkylene glycol diacetates.

11. Method for producing a working electrode comprising the following successive steps:

   - providing a formulation comprising a dissolved polymer, an ion exchanger, an ionophore, optionally a plasticiser, and a solvent selected from glycol ethers and acetates thereof, and alkylene glycol diacetates,

- providing a substrate (20), covered successively by a current collector (30) and by a transducer (40),
- depositing the formulation on the transducer (40),
- evaporating the solvent, so as to form a polymer membrane (10).

12. Method according to claim 11, **characterised in that** the transducer (40) is obtained by depositing on the current collector (30) a solution containing a carbon material and a solvent selected from glycol ethers and acetates thereof and alkylene glycol diacetates.

13. Method according to claim 12, **characterised in that** the solvent of the formulation and the solvent of the solution are identical.

FIG.1

FIG.2

FIG.3

FIG.4

FIG.5

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9117432 A1

**Littérature non-brevet citée dans la description**

- **CUARTERO et al.** Polyurethane Ionophore-Based Thin Loyer Membranes for Voltammetric Ion Activity Sensing. *Anal. Chem.,* 2016, vol. 88, 5649-5654
- **YUN et al.** Potentiometric Properties of Ion-Selective Electrode Membranes Based on Segmented Polyether Urethane Matrices. *Anal. Chem.,* 1997, vol. 69, 868-873
- *CHEMICAL ABSTRACTS,* 110-80-5
- *CHEMICAL ABSTRACTS,* 2807-30-9
- *CHEMICAL ABSTRACTS,* 109-86-4
- *CHEMICAL ABSTRACTS,* 629-14-1
- *CHEMICAL ABSTRACTS,* 112-48-1
- *CHEMICAL ABSTRACTS,* 110-71-4
- *CHEMICAL ABSTRACTS,* 111-90-0
- *CHEMICAL ABSTRACTS,* 111-77-3
- *CHEMICAL ABSTRACTS,* 112-36-7
- *CHEMICAL ABSTRACTS,* 111-55-7
- *CHEMICAL ABSTRACTS,* 623-84-7
- *CHEMICAL ABSTRACTS,* 108-65-6
- *CHEMICAL ABSTRACTS,* 111-15-9
- *CHEMICAL ABSTRACTS,* 110-49-6
- *CHEMICAL ABSTRACTS,* 20706-25-6
- *CHEMICAL ABSTRACTS,* 112-07-2
- *CHEMICAL ABSTRACTS,* 112-15-2